## Europäisches Patentamt

(19) **European Patent Office**

**Office européen des brevets**

(11) Veröffentlichungsnummer: **0 159 475**
**B1**

(12) **EUROPÄISCHE PATENTSCHRIFT**

(45) Veröffentlichungstag der Patentschrift:
**03.06.87**

(51) Int. Cl.⁴: **C 09 K 11/67**

(21) Anmeldenummer: **85101386.2**

(22) Anmeldetag: **09.02.85**

(54) Bleiaktivierte Leuchtstoffe und Verfahren zu deren Herstellung.

(30) Priorität: **19.04.84 DE 3414847**

(43) Veröffentlichungstag der Anmeldung:
**30.10.85 Patentblatt 85/44**

(45) Bekanntmachung des Hinweises auf die Patenterteilung:
**03.06.87 Patentblatt 87/23**

(84) Benannte Vertragsstaaten:
**AT BE CH DE FR GB IT LI NL SE**

(56) Entgegenhaltungen:
**FR - A - 926 122**

(73) Patentinhaber: **Degussa Aktiengesellschaft,
Weissfrauenstrasse 9, D-6000 Frankfurt am Main 1 (DE)**

(72) Erfinder: **Kiss, Akos, Dr. Dipl.-Chem., Keplerstrasse 69,
D-8750 Aschaffenburg (DE)**
Erfinder: **Kleinschmit, Peter, Dr. Dipl.-Chem.,
Wildaustrasse 19, D-6450 Hanau (DE)**
Erfinder: **Völker, Werner, Dr. Dipl.-Chem., Auf dem
Niederberg 45, D-6368 Bad Vilbel (DE)**
Erfinder: **Halbritter, Günter, Dipl.-Ing., Rhönstrasse 6,
D-8752 Schöllkrippen (DE)**

**Beschreibung**

Die Erfindung betrifft mit Blei aktivierte Leuchtstoffe und ein Verfahren zu ihrer Herstellung.

Leuchtstoffe sind feste Substanzen, die befähigt sind, nach Energieabsorption (z.B. Tageslicht, Ultraviolett, Röntgen- oder Korpuskularstrahlen) Licht auszusenden, das im allgemeinen eine grössere Wellenlänge aufweist als die absorbierte Strahlung besitzt. Die Lichtausstrahlung findet während der Erregung selbst statt und in verschiedenen langen Zeiträumen danach, die von Millisekunden bis Stunden reichen können.

Leuchtstoffe finden verbreitet Anwendung, wie beispielsweise in der Beleuchtungstechnik zur Erhöhung der Energieausbeute bei Quecksilberlampen, in der Röntgendiagnostik oder bei der Beschichtung von Fernsehröhren zur Sichtbarmachung des modulierten Elektronenstrahls. Ausserdem werden sie als Überzüge für keramische Produkte verwendet, insbesondere in Glasuren für keramische Fliesen.

Leuchtfähig sind nur wenige anorganische Verbindungen. Im allgemeinen wird die Leuchtfähigkeit erst durch eine Aktivierung erworben, zum Beispiel durch Einbau kleiner Mengen an kristallgitterfremden Ionen (Aktivatoren) in das Kristallgitter (Wirtsgitter) der anorganischen Verbindung (Grundmaterial). Bei den aktivatorhaltigen Leuchtstoffen handelt es sich daher um kristallisierte Verbindungen, in denen einige Kationen des Grundmaterials durch fremde Kationen ersetzt sind. Die eingebauten Kationen mit der sie umgebenden Schar von Anionen hat man dabei als sogenannte Leuchtzentren aufzufassen, die für die charakteristischen Absorptionen und Emissionen verantwortlich sind.

Von Bedeutung als Grundmaterial für die Leuchtstoffe sind vor allem Salze der Erdalkalien und ihrer Nebengruppenelemente Zink Kadmium, wie Phosphate, Silikate, Borate, Aluminate und Oxide. Als Aktivatoren benutzt man vorzugsweise die Seltenen Erden und Schwermetalle, wie Mangan, Blei, Zinn oder Antimon.

Die Leuchtstoffe müssen im allgemeinen sehr rein sein und ein möglichst störstellenfreies Kristallgitter besitzen, da Verunreinigungen in den Ausgangsmaterialien als Löschzentren wirken und die Leuchtintensität der Leuchtstoffe herabsetzen. Ähnlich wirken Gitterdefekte. Beim mechanischen Zerkleinern der Verbindungen wird die Leuchtfähigkeit beeinträchtigt und kann im Extremfall völlig zerstört werden.

Die bisher bekannten Leuchtstoffe haben den weiteren Nachteil, dass sie zum grossen Teil nicht temperaturstabil sind und sich in vielen Glasfritten auflösen. Sie sind daher als Farbkörper in Glasuren für keramische Fliesen nicht geeignet, die Brenntemperaturen von über 700 bis 800°C erfordern.

Leuchtstoffe, die im blaugrünen Bereich (nm 480 nm) emittieren, gibt es nur wenige. Insbesondere mangelt es an Leuchtstoffen, die in diesem Bereich eine längere Nachleuchtdauer besitzen.

Mit Blei aktivierte Leuchtstoffe sind relativ selten.

Bekannt sind im wesentlichen nur bleihaltiges Bariumsulfat und bleihaltige Erdalkalisilikate, wie Bariumstrontiummagnesiumsilikat, Bariumdisilikat oder Bariumzinksilikat, die Emissionsbanden im Bereich von 300 bis 370 nm besitzen. Ihre Herstellung muss, wie bei allen bisher bekannten Leuchtstoffen aus hochreinen Ausgangssubstanzen durch Festkörperreaktionen bei 1150 bis 1200°C erfolgen. Ausserdem sind die Produkte mahlempfindlich und nicht stabil gegen viele keramische Glasuren.

Es war daher Aufgabe der vorliegenden Erfindung, mit Blei aktivierte Leuchtstoffe zu entwickeln, die im blaugrünen Bereich emittieren, sowohl mit langwelligem (366 nm) als auch mit kurzwelligem (254 nm) Ultraviolettlicht anregbar sind, Nachleuchtzeiten im Sekunden- bis Minutenbereich besitzen, aus nichthochreinen Substanzen herstellbar, mahlunempfindlich und beständig gegen die üblichen keramischen Glasuren sind. Ausserdem sollte ein Verfahren zu deren Herstellung gefunden werden.

Diese Aufgabe wurde erfindungsgemäss dadurch gelöst, dass sie

10 bis 60 Mol.% Zirkoniumoxid ($ZrO_2$)
10 bis 60 Mol.% Boroxid ($B_2O_3$)
10 bis 60 Mol.% Siliziumoxid ($SiO_2$)
0,5 bis 10 Mol.% Bleioxid (PbO)
0 bis 15 Mol.% Natriumoxid ($Na_2O$)
0 bis 15 Mol.% Kaliumoxid ($K_2O$)
und
0 bis 5 Mol.% Aluminiumoxid ($Al_2O_3$)
enthalten.

Diese Leuchtstoffe sind weitgehend mahlunempfindlich, temperaturstabil und widerstandsfähig gegen die meisten keramischen Glasuren.

Sie sind sowohl mit langwelligem (366 nm) als auch mit kurzwelligem UV anregbar und besitzen eine Emissionsbande bei etwa 480 nm im blaugrünen Bereich. Ihre Nachleuchtdauer liegt im Sekunden- bis Minutenbereich.

Besonders bewährt haben sich Leuchtstoffe, die

40 bis 55 Mol.% Zirkoniumoxid ($ZrO_2$)
25 bis 35 Mol.% Boroxid ($B_2O_3$)
15 bis 20 Mol.% Siliziumoxid ($SiO_2$)
und
0,5 bis 2 Mol.% Bleioxid (PbO)
enthalten.

Diese Leuchtstoffe lassen sich aus handelsüblichen Substanzen in nichthochreiner Qualität herstellen, ohne merkbar an Leuchtkraft zu verlieren.

Durch Zusatz von Alkali- und Aluminiumoxid lässt sich aus diesen Leuchtstoffen eine glasähnliche Masse herstellen, die ebenfalls Leuchtstoffcharakter besitzt und zu einer nachleuchtenden Glasfritte verarbeitet werden kann, die sich hervorragend als Leuchtstoffglasur für keramische Produkte eignet.

Solche Glasuren bestehen vorzugsweise aus

10 bis 60 Mol.% Zirkoniumoxid ($ZrO_2$)
5 bis 30 Mol.% Boroxid ($B_2O_3$)
10 bis 60 Mol.% Siliziumoxid ($SiO_2$)
0,1 bis 10 Mol.% Bleioxid (PbO)
2 bis 15 Mol.% Natriumoxid ($Na_2O$)
2 bis 15 Mol.% Kaliumoxid ($K_2O$)
und
0,5 bis 5 Mol.% Aluminiumoxid ($Al_2O_3$)

Besonders bewährt haben sich Leuchtstofffritten folgender Zusammensetzung:

15 bis 30 Mol.% Zirkoniumoxid ($ZrO_2$)
5 bis 15 Mol.% Boroxid ($B_2O_3$)
40 bis 60 Mol.% Siliziumoxid ($SiO_2$)
0,5 bis 3 Mol.% Bleioxid (PbO)
5 bis 10 Mol.% Natriumoxid ($Na_2O$)
5 bis 10 Mol.% Kaliumoxid ($K_2O$)
und
1 bis 3 Mol.% Aluminiumoxid ($Al_2O_3$).

Zur Herstellung der erfindungsgemässen Leuchtstoffe werden handelsübliche Ausgangsstoffe in Oxidform oder in Form von oxidbildenden Verbindungen, wie Zirkoniumoxid, Borsäure, Kieselsäure, Bleimennige und gegebenenfalls Rasorit, Pottasche und Kaolin, in den entsprechenden Molverhältnissen intensiv gemischt und zerkleinert, dann leicht gepresst und in einer Festkörperreaktion bei 700 bis 1500°C während 0,1 bis 6 Stunden an der Luft geglüht.

Vorzugsweise wird zur Herstellung von kristallinen Leuchtstoffen bei 1000 bis 1200°C, zur Herstellung von leuchtenden Fritten bei 1250 bis 1450°C geglüht.

Beispielsweise werden 111,3 g Zirkoniumoxid, 66,8 g Borsäure, 15,8 g Kieselsäure und 6,1 g Bleimennige 15 Minuten intensiv gemischt und zerkleinert. Das Gemisch wird in einem Keramiktiegel leicht eingedrückt und in einem Ofen 1 Stunde bei 1080°C geglüht. Der so hergestellte Leuchtstoff ist temperaturstabil und verliert beim Aufmahlen nicht merklich an Leuchtkraft.

Folgende Leuchtstoffe wurden nach diesem Verfahren hergestellt:

| $ZrO_2$ [Mol.%] | $B_2O_3$ [Mol.%] | $SiO_2$ [Mol.%] | PbO [Mol.%] |
|---|---|---|---|
| 42,5 | 26,0 | 30,3 | 1,2 |
| 32,6 | 17,4 | 48,2 | 1,8 |
| 10,1 | 46,5 | 41,9 | 1,5 |
| 46,4 | 31,8 | 16,4 | 5,4 |

Zur Herstellung von Leuchtfritten muss das Pulvergemisch, das zusätzlich noch Alkali- und Aluminiumoxide bzw. Alkaliverbindungen enthält, die beim Glühen in die Oxidform übergehen, wie Karbonate, bei Temperaturen geglüht werden, bei denen das Gemisch schmilzt. Man erhält sehr zähe Massen, die sich sehr gut zur Glasurbereitung eignen.

Folgende Leuchtglasuren wurden nach diesem Verfahren hergestellt:

| $ZrO_2$ [Mol.%] | $B_2O_3$ [Mol.%] | $SiO_2$ [Mol.%] | PbO [Mol.%] | $Na_2O$ [Mol.%] | $K_2O$ [Mol.%] | $Al_2O_3$ [Mol.%] |
|---|---|---|---|---|---|---|
| 25,2 | 28,1 | 25,9 | 1,5 | 2,8 | 13,0 | 3,5 |
| 40,2 | 21,0 | 12,1 | 6,5 | 14,1 | 1,6 | 4,5 |

**Patentansprüche**

1. Mit Blei aktivierte Leuchtstoffe, dadurch gekennzeichnet, dass die
10 bis 60 Mol.% Zirkoniumoxid ($ZrO_2$)
10 bis 60 Mol.% Boroxid ($B_2O_3$)
10 bis 60 Mol.% Siliziumoxid ($SiO_2$)
0,5 bis 10 Mol.% Bleioxid (PbO)
0 bis 15 Mol.% Natriumoxid ($Na_2O$)
0 bis 15 Mol.% Kaliumoxid ($K_2O$)
und
0 bis 5 Mol.% Aluminiumoxid ($Al_2O_3$)
enthalten.

2. Leuchtstoffe nach Anspruch 1, dadurch gekennzeichnet, dass sie
40 bis 55 Mol.% Zirkoniumoxid ($ZrO_2$)
25 bis 35 Mol.% Boroxid ($B_2O_3$)
15 bis 20 Mol.% Siliziumoxid ($SiO_2$)
und
0,5 bis 2 Mol.% Bleioxid (PbO)
enthalten.

3. Leuchtstoffe nach Anspruch 1, dadurch gekennzeichnet, dass sie
10 bis 60 Mol.% Zirkoniumoxid ($ZrO_2$)
5 bis 30 Mol.% Boroxid ($B_2O_3$)
10 bis 60 Mol.% Siliziumoxid ($SiO_2$)
0,1 bis 10 Mol.% Bleioxid (PbO)
2 bis 15 Mol.% Natriumoxid ($Na_2O$)
2 bis 15 Mol.% Kaliumoxid ($K_2O$)
und

0,5 bis 5 Mol.% Aluminiumoxid ($Al_2O_3$)
enthalten.

4. Leuchtstoffe nach Anspruch 1 und 3, dadurch gekennzeichnet, dass sie
15 bis 30 Mol.% Zirkoniumoxid ($ZrO_2$)
5 bis 15 Mol.% Boroxid ($B_2O_3$)
40 bis 60 Mol.% Siliziumoxid ($SiO_2$)
0,5 bis 3 Mol.% Bleioxid (PbO)
5 bis 10 Mol.% Natriumoxid ($Na_2O$)
5 bis 10 Mol.% Kaliumoxid ($K_2O$)
und
1 bis 3 Mol.% Aluminiumoxid ($Al_2O_3$)
enthalten.

5. Verfahren zur Herstellung von Leuchtstoffen nach Anspruch 1 bis 4, dadurch gekennzeichnet, dass die Ausgangskomponenten in Oxidform oder in Form oxidbildender Verbindungen in den entsprechenden Molverhältnissen gemischt und zerkleinert, dann gepresst und in einer Festkörperreaktion bei 700 bis 1500°C während 0,1 bis 6 Stunden an Luft geglüht werden.

**Claims**

1. Luminous substances activated with lead, characterised in that they contain
from 10 to 60 mol% of zirconium oxide ($ZrO_2$)
from 10 to 60 mol% of boron oxide ($B_2O_3$)
from 10 to 60 mol% of silicon oxide ($SiO_2$)

from 0,5 to 10 mol% of lead oxide (PbO)
from   0  to 15 mol% of sodium oxide ($Na_2O$)
from   0  to 15 mol% of potassium oxide ($K_2O$)
and
from   0  to   5 mol% of aluminium oxide ($Al_2O_3$)

2. Luminous substances according to claim 1, characterised in that they contain
from 40  to 55 mol% of zirconium oxide ($ZrO_2$)
from 25  to 35 mol% of boron oxide ($B_2O_3$)
from 15  to 20 mol% of silicon oxide ($SiO_2$)
and
from 0,5 to   2 mol% of lead oxide (PbO)

3. Luminous substances according to claim 1, characterised in that they contain
from 10  to 60 mol% of zirconium oxide ($ZrO_2$)
from   5  to 30 mol% of boron oxide ($B_2O_3$)
from 10  to 60 mol% of silicon oxide ($SiO_2$)
from 0,1 to 10 mol% of lead oxide (PbO)
from   2  to 15 mol% of sodium oxide ($Na_2O$)
from   2  to 15 mol% of potassium oxide ($K_2O$)
and
from   0,5 to   5 mol% of aluminium oxide ($Al_2O_3$)

4. Luminous substances according to claims 1 and 3, characterised in that they contain
from 15  to 30 mol% of zirconium oxide ($ZrO_2$)
from   5  to 15 mol% of boron oxide ($B_2O_3$)
from 40  to 60 mol% of silicon oxide ($SiO_2$)
from 0,5 to   3 mol% of lead oxide (PbO)
from   5  to 10 mol% of sodium oxide ($Na_2O$)
from   5  to 10 mol% of potassium oxide ($K_2O$)
and
from   1  to   3 mol% of aluminium oxide ($Al_2O_3$).

5. A process for the production of luminous substances according to claims 1 to 4, characterised in that the starting components are mixed in oxide form or in the form of oxide-forming compounds in the corresponding molar ratios and are crushed, then pressed and caused to glow in a solid body reaction at from 700 to 1500°C for between 0.1 and 6 hours in air.

**Revendications**

1. Substances luminescentes activées au plomb, caractérisées en ce qu'elles contiennent:

10  à 60 % en mole d'oxyde de zirconium ($ZrO_2$)
10  à 60 % en mole d'oxyde de bore ($B_2O_3$)
10  à 60 % en mole d'oxyde de silicium ($SiO_2$)
0,5 à 10 % en mole d'oxyde de plomb (PbO)
  0  à 15 % en mole d'oxyde de sodium ($Na_2O$)
  0  à 15 % en mole d'oxyde de potassium ($K_2O$)
et
  0  à   5 % en mole d'oxyde d'aluminium ($Al_2O_3$)

2. Substances luminescentes selon la revendication 1, caractérisées en ce qu'elles contiennent:
40  à 55 % en mole d'oxyde de zirconium ($ZrO_2$)
25  à 35 % en mole d'oxyde de bore ($B_2O_3$)
15  à 20 % en mole d'oxyde de silicium ($SiO_2$)
et
0,5 à   2 % en mole d'oxyde de plomb (PbO)

3. Substances luminescentes selon la revendication 1, caractérisées en ce qu'elles contiennent:
10  à 60 % en mole d'oxyde de zirconium ($ZrO_2$)
  5  à 30 % en mole d'oxyde de bore ($B_2O_3$)
10  à 60 % en mole d'oxyde de silicium ($SiO_2$)
0,1 à 10 % en mole d'oxyde de plomb (PbO)
  2  à 15 % en mole d'oxyde de sodium ($Na_2O$)
  2  à 15 % en mole d'oxyde de potassium ($K_2O$)
et
0,5 à   5 % en mole d'oxyde d'aluminium ($Al_2O_3$)

4. Substances luminescentes selon les revendications 1 et 3, caractérisées en ce qu'elles contiennent:
15  à 30 % en mole d'oxyde de zirconium ($ZrO_2$)
  5  à 15 % en mole d'oxyde de bore ($B_2O_3$)
40  à 60 % en mole d'oxyde de silicium ($SiO_2$)
0,5 à   3 % en mole d'oxyde de plomb (PbO)
  5  à 10 % en mole d'oxyde de sodium ($Na_2O$)
  5  à 10 % en mole d'oxyde de potassium ($K_2O$)
et
  1  à   3 % en mole d'oxyde d'aluminium ($Al_2O_3$).

5. Procédé pour la préparation de substances luminescentes selon l'une quelconque des revendications 1 à 4, caractérisé en ce que les composantes de départ, sous forme d'oxydes ou sous forme de composés formant des oxydes, sont mélangés dans les proportions molaires appropriées, et broyés, puis comprimés et calcinés à l'air, dans une réaction à l'état solide, pendant 0,1 à 6 heures, à 700-1500°C.